Europäisches Patentamt

European Patent Office

Office européen des brevets

(19)

(11) Numéro de publication : **0 167 430**
**B1**

# FASCICULE DE BREVET EUROPÉEN

(12)

(45) Date de publication du fascicule du brevet :
06.07.88

(51) Int. Cl.⁴ : **H 04 N 7/13**

(21) Numéro de dépôt : **85401089.9**

(22) Date de dépôt : **04.06.85**

(54) **Procédé et dispositif d'extraction de synchronisation pour système de diffusion à multiplexage temporel de signaux numériques et analogiques.**

(30) Priorité : 04.06.84 FR 8408728

(43) Date de publication de la demande :
08.01.86 Bulletin 86/02

(45) Mention de la délivrance du brevet :
06.07.88 Bulletin 88/27

(84) Etats contractants désignés :
**AT BE CH DE GB IT LI LU NL SE**

(56) Documents cités :
FR-A- 2 459 594
US-A- 2 516 742
US-A- 3 914 536
US-A- 3 928 720
EUROPEAN BROADCASTING UNION (E.B.U.)
REVIEW - TECHNICAL, no. 200, août 1983, pages 172-185, Bruxelles, BE; H. MERTENS et al.: "The C-MAC/packet system for direct satellite television"
I.E.E. PROCEEDINGS SECTION A A I, vol. 129, no. 7, partie A, septembre 1982, pages 528-531, Old Woking, Surrey, GB; M.D. WINDRAM et al.: "Multiple sound channels in satellite broadcasting"
FUNKSCHAU, vol. 49, no. 19, septembre 1977, pages 62-67, Munich, DE; D. EATON et al.: "Die Grundlagen von teletext und viewdata"

(73) Titulaire : **ETAT FRANCAIS représenté par le Ministre des PTT (Centre National d'Etudes des Télécommunications)**
**38-40 rue du Général Leclerc**
**F-92131 Issy-les-Moulineaux (FR)**

**Etablissement Public de Diffusion dit "Télédiffusion de France"**
**21-27 rue Barbès**
**F-92120 Montrouge (FR)**

(72) Inventeur : **Alard, Michel**
**11, rue Victor Hugo**
**F-35000 Rennes (FR)**

(74) Mandataire : **Fort, Jacques et al**
**CABINET PLASSERAUD 84, rue d'Amsterdam**
**F-75009 Paris (FR)**

EP 0 167 430 B1

## Description

L'invention concerne les systèmes de diffusion du type utilisant un multiplexage temporel de signaux numériques, qui assurent la synchronisation d'ensemble, et de signaux analogiques. Elle trouve une application particulièrement importante dans les systèmes de télé-diffusion à multiplexage temporel de signaux d'images analogiques et de signaux numériques de son et de données émis sous forme de salves pendant les intervalles de suppression ligne. L'extraction de la synchronisation pose en effet dans ce cas un problème que l'on ne rencontre pas lorsque le signal vidéo est composite (SECAM, PAL ou NTSC par exemple) et que la synchronisation ligne est assurée par des impulsions placées dans chaque intervalle de suppression (ligne et trame) et utilisant des niveaux interdits au signal de luminance. La reconnaissance des signaux est alors simple.

La synchronisation est également simple lorsque le signal est purement numérique et que les données transmises ont une indépendance statistique qui peut être intrinsèque ou obtenue artificiellement par brassage (addition modulo 2 d'une séquence pseudoaléatoire). Les transitions sont alors en effet en nombre suffisant pour permettre de récupérer l'horloge et d'estimer l'amplitude et la valeur moyenne du signal, donc d'ajuster le seuil (ou les seuils) de décodage des données et, par voie de conséquence, de retrouver les motifs de synchronisation.

Il n'en est plus de même dans le cas d'un multiplex temporel en bande de base comportant un signal image qui, du fait qu'il est par nature redondant et présente une valeur moyenne très variable, brise l'indépendance statistique et interdit l'emploi de seuils fixes choisis une fois pour toutes par rapport au signal d'origine.

Le problème est particulièrement aigu dans le cas d'un multiplex où les niveaux extrémaux du signal de données ne dépassent pas le niveau analogique, ce qui rend impossible le repérage des signaux numériques, et où les signaux analogiques présentent une puissance notable à la fréquence d'horloge des signaux numériques. Cette dernière situation se rencontre notamment lorsque le multiplex de télévision associe, à un multiplexage analogique à composantes (ou MAC), un signal de données codé en duobinaire. Le débit des éléments binaires du signal numérique est de 10,125 Mbits/s et correspond à une bande spectrale pour laquelle le signal analogique comprimé temporellement présente une énergie appréciable.

Le domaine d'application envisagé par l'invention concerne le système connu sous le nom de « D2-MAC-PAQUETS ». Ce système, qui associe dans un même signal bande de base un signal de type MAC et des données à 10,125 Mb/s codés sous forme duobinaire, est dérivé du système C-MAC/PAQUETS proposé par l'U.E.R. pour la radiodiffusion par satellite. Toutefois, le système D2-MAC-PAQUETS s'applique également à la diffusion sur des supports terrestres n'offrant pas la largeur de bande B = 27 MHz requise pour la télévision directe par satellite dans la bande des 12 GHz. Il permet en particulier la diffusion dans des canaux de 7 ou 8 MHz utilisant la modulation d'amplitude à bande latérale résiduelle.

Dans tous les cas, l'invention vise à permettre l'acquisition rapide de la synchronisation, puis sa conservation dans les systèmes de diffusion du type ci-dessus définis. Elle vise en conséquence à permettre de démoduler le signal numérique même en présence de distorsions importantes aux basses fréquences, de coupure des basses fréquences, d'addition de bruit ou d'un signal sinusoïdal à la fréquence du réseau (50 Hz ou 60 Hz) et de superposition d'une tension continue.

Dans ce but, l'invention propose notamment un procédé d'extraction de synchronisation pour système de diffusion à multiplexage temporel de signaux numériques contenant un motif de synchronisation et de signaux analogiques, caractérisé en ce qu'on détecte les valeurs extrêmes des signaux à soumettre au décodage, préalablement amplifiés avec un gain G, avec une constante de temps compatible avec les fréquences de coupure basses à rattraper ; en ce qu'on commande le gain G en fonction décroissante de la différence entre les valeurs extrêmes avec une constante de temps supérieure de plusieurs ordres de grandeur à la période de répétition du multiplex ; en ce que (avant décodage et détermination des valeurs extrêmes) on ajoute au signal amplifié une composante continue qui est une fonction décroissante de la somme des valeurs extrêmes, et ce jusqu'à récupération du signal d'horloge puis identification du motif de synchronisation en aval du décodage.

Une fois cette phase d'acquisition réalisée, le maintien de la synchronisation peut être assuré en substituant une commande par différence entre les niveaux de blanc et de noir à la commande en fonction de la différence entre les valeurs extrêmes et en substituant une commande par un signal de clampage inclus à chaque ligne dans le multiplex à la commande en fonction de la somme des valeurs extrêmes.

Les diverses commandes doivent évidemment être effectuées avec une constante de temps appropriée, qui peut être obtenue en introduisant une intégration dans l'élaboration d'un signal de commande du gain et de la valeur ajoutée au signal amplifié.

Dans son application à l'extraction de synchronisation pour un système de télévision à 625 lignes à multiplexage temporel de signaux numériques codés en duobinaire et contenant les motifs de synchronisation, et de signaux analogiques de luminance et de chrominance comprimés temporellement, le rapport entre l'amplitude des signaux numériques et celle des signaux analogiques étant compris entre 80 % et 100 %, on peut utiliser, au cours de la phase d'acquisition, une constante de temps comprise entre 100 ms et 1 s pour la commande du gain ; on peut utiliser, pour l'élaboration du niveau continu ajouté au signal, une constante de temps approximativement égale à la durée d'une ligne pendant l'acquisition, de 1 à 5 μs au cours du maintien.

L'invention propose également un dispositif permettant de mettre en œuvre le procédé ci-dessus défini.

L'invention sera mieux comprise à la lecture de la description qui suit d'un mode particulier d'exécution donné à titre d'exemple non limitatif. La description se réfère aux dessins qui l'accompagnent, dans lesquels :

— la figure 1 montre la structure d'une ligne de télévision de 64 μs d'un signal dit « D2-MAC-PAQUETS »,

— la figure 2 est le diagramme de l'œil du signal de la figure 1,

— la figure 3 est un schéma de décodeur duobinaire,

— la figure 4 est un schéma synoptique montrant une constitution possible du dispositif d'extraction de synchronisation,

— la figure 5 est un schéma montrant une constitution possible d'un détecteur de crête utilisable dans le dispositif de la figure 4,

— la figure 6 est un schéma montrant le mode d'intervention des détecteurs de crête et du dispositif en présence d'une cassure basse-fréquence,

— la figure 7 est un schéma de principe d'une variante d'un fragment de la figure 4.

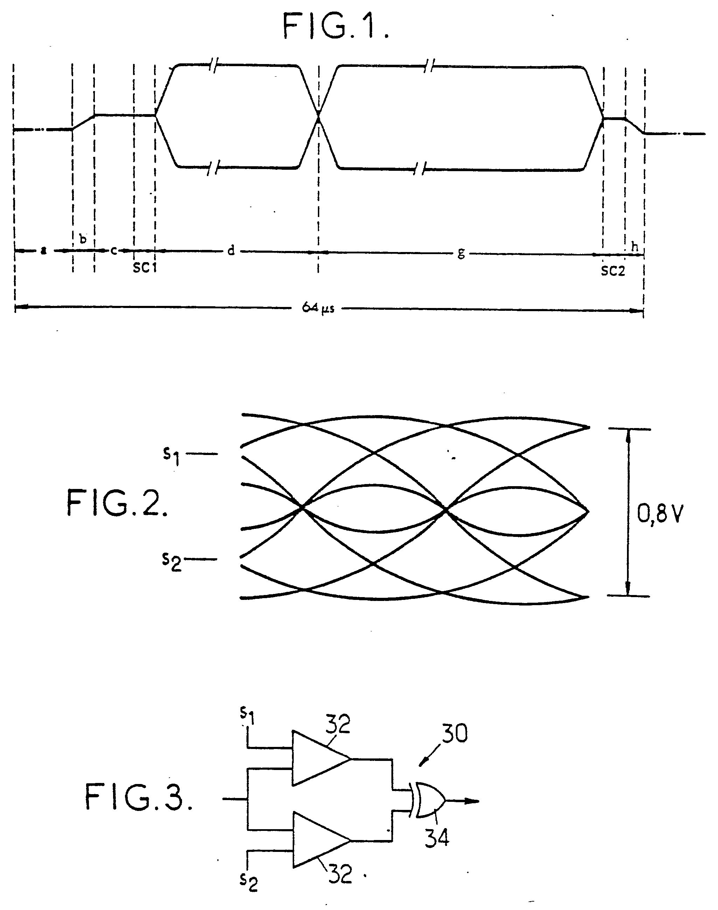

L'invention sera décrite dans son application à un système de télévision utilisant une forme de signal du genre montré en figure 1 pour une ligne de balayage, dont les intervalles successifs a à h sont affectés de la façon suivante :

a : période de données (106 bits émis à un débit instantané de 10,125 Mbits/s) occupée par un bit de départ, un mot de synchronisation ligne de 7 bits, puis une centaine de bits de données proprement dites, pouvant comporter des voies son d'information, de service, de télétext. Ces données sont codées en duobinaire, c'est-à-dire en un code à trois niveaux ayant des transitions interdites, dont le diagramme de l'œil est montré en figure 2. Le décodage du signal duobinaire en bande de base (en sortie du démodulateur haute fréquence qui sera prévu dans le récepteur) est réalisé simplement à l'aide d'un circuit 30 qui peut être celui de la figure 3, comportant deux comparateurs 32 et une porte « OU EXCLUSIF » 34,

b : transition entre le signal de données et la période de clampage,

c : période de clampage, fournissant un niveau d'alignement,

scl : embrouillage image,

d : différence de couleur (354 périodes d'horloge),

g : luminance (307 périodes d'horloge),

sc2 : embrouillage image,

h : transition entre le signal image et le signal de données.

L'ensemble de la ligne représente 1296 périodes d'horloge. Chaque trame comporte de plus des paliers de référence, émis au cours de la 624e ligne, c'est-à-dire au niveau de la trame. Ces paliers seront des niveaux de noir et de blanc. Chaque trame comporte également au cours de la 625e ligne, un mot de synchronisation trame beaucoup plus long que le mot de synchronisation ligne (64 bits au lieu de 7 bits) de façon à assurer une certitude quasi absolue de reconnaissance du motif de synchronisation dès la première identification.

Cette constitution est similaire à celle du système C-MAC/PAQUETS dont on pourra trouver une description dans l'article « Système C-MAC/PAQUETS pour la télévision directe par satellite » (Revue de l'U.E.R.-Technique n° 220, août 1983).

L'amplitude du signal de données étant comprise entre 80 % et 100 % de celle du signal image, il n'est pas possible de différencier le signal de données pour en évaluer l'amplitude et la valeur moyenne et ajuster les seuils de détection en conséquence par rapport aux signaux. Il faut noter au passage que cet ajustage peut s'effectuer soit en agissant sur les seuils, soit en agissant sur l'amplification du signal reçu et sur une tension de décalage qui lui est ajoutée. C'est en règle générale la seconde solution qui sera retenue et elle sera seule envisagée par la suite.

Pour lever la difficulté, le procédé suivant l'invention utilise deux phases successives, que l'on qualifiera de phase d'acquisition et de phase de maintien.

Au cours de la phase d'acquisition, il sera nécessaire d'estimer l'amplitude et la valeur moyenne du signal de données à partir de l'ensemble des signaux, ce qui permet d'ajuster de façon approximative la position du seuil de décodage (ou des seuils, lorsque deux seuils de décodage sont requis, ce qui est le cas du codage duobinaire) par rapport au signal. Cet ajustement s'effectuera par correction de l'amplification du signal et adjonction d'une tension de décalage pour le positionner de façon approximative par rapport aux seuils de décodage S1 et S2 fixes (figure 3). On peut alors récupérer le signal d'horloge, puis extraire le motif de synchronisation.

A la fin de la phase d'acquisition, on dispose d'une base de temps et on peut alors, au cours de la phase de maintien, aligner le signal à partir du niveau de référence transmis une fois par ligne (niveau de clampage) et réguler son amplitude d'après les paliers de noir et de blanc transmis à chaque trame.

Au cours de la phase de maintien, on réalise donc une régulation fine du signal.

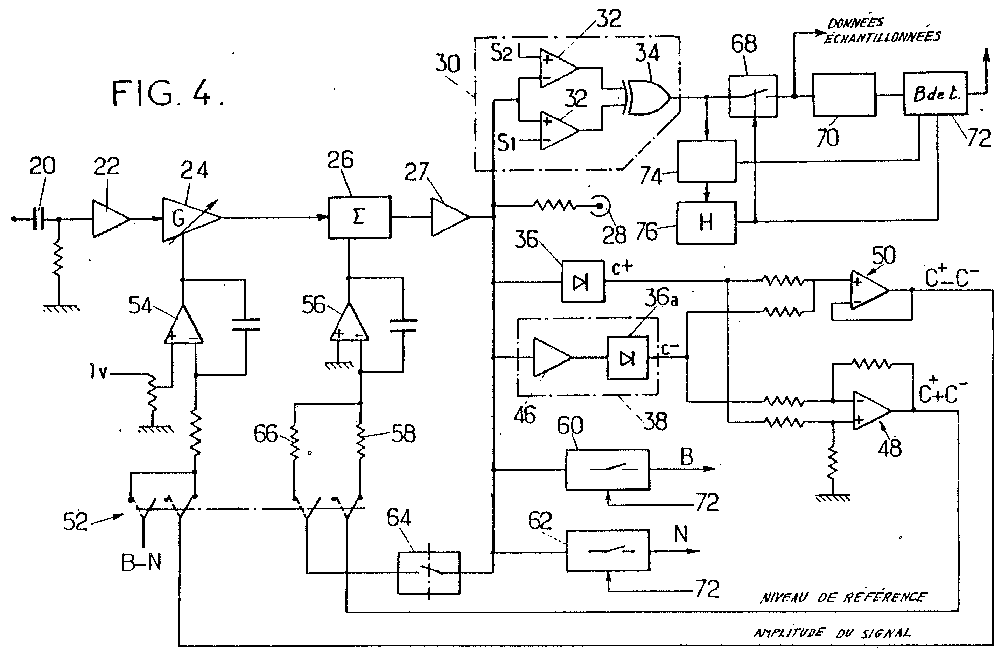

Le dispositif montré en figure 4 permet de réaliser les fonctions ci-dessus. Le dispositif reçoit le signal à travers un condensateur 20 destiné à supprimer une éventuelle composante continue. Le condensateur est suivi d'un amplificateur tampon 22 à haute impédance d'entrée, puis d'un amplificateur 24 à gain G variable destiné à permettre de réguler l'amplitude du signal dans une plage qui pourra être généralement de ± 6 dB. L'amplificateur 24 est suivi d'un sommateur 26 associé à un amplificateur vidéo 27 et permettant de juxtaposer, au signal de l'amplificateur 24, une tension de correction.

L'amplificateur 27 alimente plusieurs voies. L'une est constituée par une sortie vidéo 28. Une seconde voie est constituée par les circuits de fourniture des données échantillonnées. Elle comporte le décodeur 30 constitué de deux comparateurs 32 à seuils S1 et S2 suivis d'une porte OU EXCLUSIF 34. Ce décodeur alimente des composants de récupération d'horloge et d'échantillonnage des données qui seront décrits plus loin.

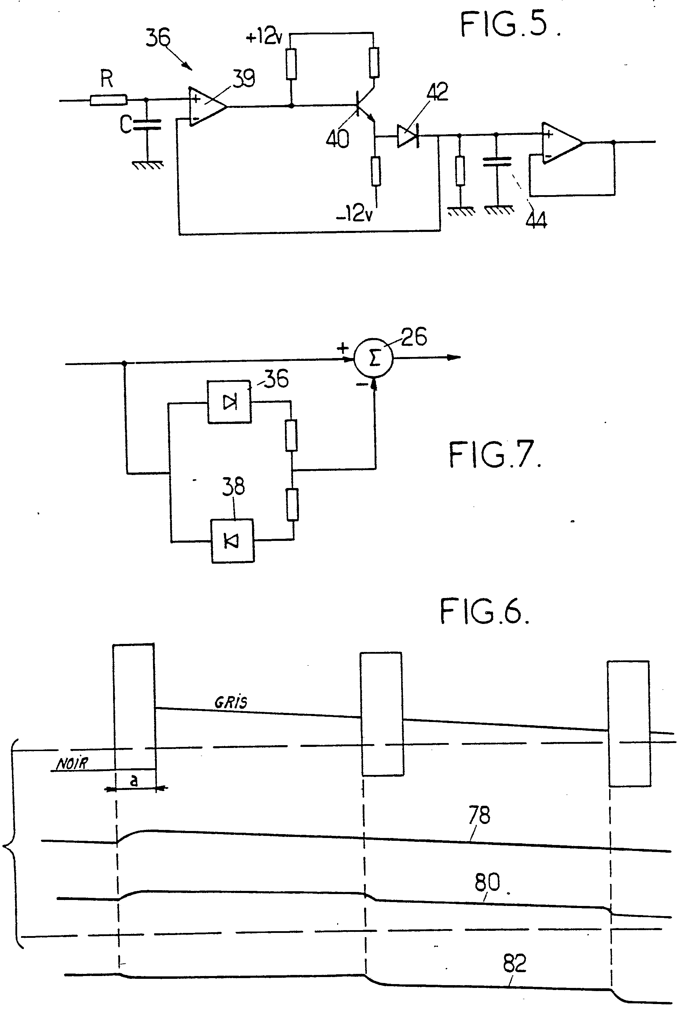

Une voie de régulation et d'alignement du signal comporte, en parallèle, un détecteur de crête positive 36 et un détecteur de crête négative 38. Le détecteur 36 peut avoir la constitution montrée en figure 5. Ce détecteur 36 comporte un filtre RC d'entrée présentant une constante de temps de l'ordre de 100 ns, destiné à éliminer une partie du bruit et à supprimer les suroscillations du signal de données. La constante de temps est choisie telle que le détecteur de crête 36 atteigne le niveau maximal de signal de données codé en duobinaire (c'est-à-dire les crêtes positives) correspondant à une suite de « 1 ». Il comporte un amplificateur opérationnel 39 dont l'entrée positive est reliée à la sortie du circuit RC. Cet amplificateur opérationnel est suivi d'un transistor 40 et d'un redresseur 42. L'aval du redresseur 42 est rebouclé sur l'entrée inverseuse de l'amplificateur opérationnel 39. Un condensateur de stockage 44 permet de conserver la valeur de crête. Il a une valeur telle que la constante de temps de décharge soit de l'ordre de 3 ms. Ce choix est le résultat d'un compromis : il permet de rattraper les coupures jusqu'à une fréquence de l'ordre de 50 Hz sans dégrader la précision des seuils pendant la phase d'acquisition, comme le ferait une constante de temps plus faible.

Le détecteur de crête négative 38 comporte un détecteur de crête positive 36a identique au détecteur 36, précédé d'un inverseur 46.

Les détecteurs de crête 36 et 38 alimentent deux circuits dont l'un fait la somme et l'autre la différence des valeurs extrêmes des signaux. Chacun peut être constitué, comme représenté sur la figure 4, par un amplificateur opérationnel 48 ou 50 bouclé de façon appropriée.

La différence C+ — C— donne l'amplitude du signal de sortie. La somme C+ + C— donne une estimation du niveau de référence pour la ligne.

Une batterie de commutateurs 52, qui peuvent être réalisés en technologie MOS, assure, lors de la phase d'acquisition, les liaisons illustrées en traits pleins sur la figure 4. Dans cet état des commutateurs 52, la différence des signaux C+ — C— est appliquée à l'une des entrées d'un amplificateur opérationnel 54 monté en intégrateur et elle est comparée à une tension de référence (+ 1 V par exemple). La sortie de l'intégrateur 54 commande le gain G de l'amplificateur à gain variable 24. La constante de temps de la boucle de commande de l'amplificateur 24 ainsi constitué peut être choisie, suivant la vitesse de réponse souhaitée, entre 100 ms et 1 s. Une valeur de 600 ms environ sera généralement appropriée.

Dans le mode de réalisation illustré, la somme des signaux est appliquée à un second amplificateur opérationnel 56 monté en intégrateur, qui fournit le niveau à ajouter au signal dans le sommateur 26. La résistance 58 du réseau RC d'intégration est choisie de façon que la constante de temps d'intégration ait une durée approximativement égale à celle d'une ligne, c'est-à-dire 64 µs. Comme on le verra plus loin, cette valeur est optimale, car elle permet d'annuler le signal d'erreur en une ligne. De façon plus générale, si une valeur différente τ de la constante de temps était adoptée, le signal d'erreur fourni suivrait une progression géométrique de loi 1-64/τ. Cette formule montre qu'on ne peut descendre au-dessous d'une valeur égale à 32 µs, car il y aurait divergence de la série de valeurs du signal d'erreur.

L'amplificateur 27 alimente encore deux voies constituées par des échantillonneurs 60 et 62 destinés à fournir une référence de blanc B et une référence de noir N. Ces échantillonneurs, dont la commande sera décrite plus loin, alimentent, par l'intermédiaire d'éléments de mémorisation sur une courte durée, un soustracteur (non représenté mais pouvant être similaire au soustracteur 48) dont la sortie est reliée à un commutateur de liaison avec l'intégrateur 54 lors de la phase de maintien (jonctions indiquées en tirets sur la figure 4).

Enfin, l'amplificateur 27 alimente, par l'intermédiaire d'un échantillonneur de niveau de clampage 64, un commutateur de liaison avec l'intégrateur 56 en phase de maintien. La résistance d'intégration 66, qui se substitue alors à la résistance 58, est choisie pour donner à l'intégrateur 56 une constante de temps relativement courte, typiquement de 1 à 5 µs.

Le décodeur 30 est relié à un circuit qui assure, d'une part, la récupération d'horloge, d'autre part, la fourniture des données numériques échantillonnées. Pour cela, il comporte une première branche munie d'un échantillonneur 68 dont la sortie fournit les données échantillonnées, une fois l'acquisition de la synchronisation réalisée. La sortie de l'échantillonneur est également reliée à un corrélateur 70 de récupération du motif de synchronisation trame. Du fait de la longueur de ce motif, une seule identification suffit (alors que dans le cas du motif de synchronisation ligne, on ne considérera l'acquisition réalisée qu'après plusieurs identifications successives). Enfin, la sortie du corrélateur est appliquée à une base de temps 72 destinée à extraire les signaux de service et notamment les commandes de commutation.

La base de temps 72 est reliée à une entrée de déblocage d'une porte 74 d'un circuit de récupération d'horloge 76 qui, à son tour, commande (une fois le régime de maintien atteint) l'échanti-

lonneur 68 et la base de temps 72.

Le fonctionnement du circuit de la figure 4 est le suivant.

Au début de la phase d'acquisition, les commutateurs 52 sont placés par la base de temps 72 dans l'état montré en traits pleins. L'horloge 76 fonctionne en oscillateur libre sans relation de phase avec le rythme d'arrivée des échantillons numériques. La porte 74 est ouverte en permanence.

Au cours de chaque ligne, les détecteurs de crête 36 et 38 fournissent les valeurs extrêmes du signal de données. La différence des valeurs extrêmes est utilisée pour ajuster le gain G et la somme pour aligner approximativement le signal. Une fois cet ajustage réalisé, le décodage par 30 permet au corrélateur d'identifier la synchronisation trame ou, par une stratégie classique de plusieurs reconnaissances successives, la synchronisation ligne. Cette reconnaissance permet de caler la base de temps 72 qui, à son tour, permet de verrouiller le dispositif de récupération de l'horloge 76 par fermeture de la porte 74 hors des périodes d'arrivée du signal numérique.

Une fois le signal positionné de façon approximative par rapport aux seuils S1 et S2 et la synchronisation récupérée, la base de temps 72 commande le basculement des commutateurs 52. On peut pour cela utiliser des commutateurs MOS ayant habituellement un temps de commutation d'environ 500 ns. A ce stade, les intégrateurs placés dans les commandes de 24 et 36 jouent un rôle essentiel, car ils maintiennent les niveaux et évitent de perdre le prépositionnement réalisé au cours de la phase d'acquisition.

A partir de ce moment, les signaux issus de la base de temps 72 commandent les échantillonneurs 60 et 62 fournissant les niveaux de blanc et de noir dont la différence commande le gain G de l'amplificateur 24, avec la même constante de temps que lors de la commande par C+ — C—. La tension d'alignement appliquée au sommateur 26 est ajustée par échantillonnage de niveau de clampage pendant la fermeture de l'échantillonneur 64 au cours de la période c (figure 1). La durée d'échantillonnage est brève (700 ns environ) et exige l'emploi d'un échantillonneur 64 à commutation rapide. On peut utiliser un commutateur hybride bipolaire ayant une durée de commutation inférieure à 50 ns, tel que le modèle V 111 de CIT ALCATEL.

Un exemple d'action du circuit en cas de cassure basse fréquence est représenté sur la figure 6 qui correspond au cas du passage du signal d'image du noir permanent au gris permanent d'une trame à la suivante. La première ligne montre la forme du signal dégradé par la coupure brutale des basses fréquences ; les courbes 78, 80 et 82 de la partie basse montrent respectivement les valeurs de crête positive, moyenne et de crête négative et font apparaître le réalignement progressif par modification du niveau appliqué au sommateur 26. On constate que la valeur moyenne 80 varie peu pendant la durée de ligne, les modifications intervenant au début de la salve de données.

Si on désigne par εn le signal d'erreur au cours de la ligne d'ordre n, par εn + 1 le signal au cours de la ligne suivante et par τ la constante de temps (en μs) de l'intégrateur 56, on a :

εn + 1 = εn — εn (64/τ)

ce qui fait apparaître l'optimum τ = 64 μs.

On voit que les écarts dus à des variations du niveau analogique sont ainsi rattrapés en une ligne.

Des variantes de réalisation de l'invention sont évidemment possibles. En particulier, on peut commander en boucle ouverte la tension appliquée au sommateur 26 en retranchant la tension représentative de la valeur moyenne (demi-somme des valeurs extrêmes) dans le sommateur. Le circuit est alors celui de la figure 7. Mais cette configuration complique la mise hors circuit des détecteurs de crête lors de la phase de maintien.

Le dispositif qui vient d'être décrit a l'avantage supplémentaire de permettre le centrage du signal dans un filtre de réception, nécessaire lorsque le signal est modulé en fréquence pour en permettre la démodulation.

Il suffit pour cela de supprimer l'étage d'entrée à condensateur 20, afin d'autoriser le passage de la composante continue du signal et de relier directement le discriminateur à l'amplificateur 24. La tension de correction appliquée au sommateur 26 donne alors une estimation du décentrage du signal modulé par rapport au filtre de réception. Dans la mesure où il n'y a pas de décalage entre le centre du filtre de réception et le zéro du discriminateur, cette tension est utilisable en tant que commande d'un circuit de commande automatique de fréquence (CAF). Ce dernier doit simplement avoir une constante de temps suffisamment longue pour qu'il n'y ait pas d'oscillations à basse fréquence dues à la présence de deux boucles de régulation en parallèle. Le circuit de CAF devient automatiquement échantillonné par 64 dès que la synchronisation a été reconnue.

**Revendications**

1. Procédé d'extraction de synchronisation pour système de diffusion à multiplexage temporel de signaux numériques contenant un motif de synchronisation et de signaux analogiques, caractérisé en ce qu'on détecte les valeurs extrêmes des signaux à soumettre au décodage, préalablement amplifiés avec un gain G, avec une constante de temps compatible avec les fréquences de coupure basses à rattraper ; en ce qu'on commande le gain G en fonction décroissante de la différence entre les valeurs extrêmes avec une constante de temps supérieure de plusieurs ordres de grandeur à la période de répétition du multiplex ; en ce que (avant décodage et détermination des valeurs extrêmes) on ajoute au signal amplifié une composante continue qui est une fonction décroissante de la somme des valeurs extrêmes, et ce jusqu'à récupération du signal d'horloge puis identification du motif de synchronisation en aval du décodage.

2. Procédé selon la revendication 1, caractérisé en ce que, après identification de signal de synchronisation, on maintient la synchronisation en substituant une commande par différence entre les niveaux de blanc et de noir à la commande en fonction de la différence entre les valeurs extrêmes et en substituant une commande par un signal de clampage inclus à chaque ligne dans le multiplex à la commande en fonction de la somme des valeurs extrêmes.

3. Procédé selon la revendication 1 pour système de télévision à 625 lignes avec une fréquence d'horloge de 20,25 MHz, à multiplexage temporel de signaux numériques codés en duobinaire et contenant un motif de synchronisation par ligne et de signaux analogiques de luminance et de chrominance comprimés temporellement, le rapport entre l'amplitude des signaux numériques et celle des signaux analogiques étant compris entre 80 % et 100 %, caractérisé en ce qu'on utilise au cours de la première phase une constante de temps dont l'ordre de grandeur est de 100 ms à 1 s pour la commande du gain et une constante de temps approximativement égale à la durée d'une ligne pour l'élaboration du niveau continu ajouté au signal.

4. Procédé selon les revendications 2 et 3, caractérisé en ce qu'on utilise, au cours du maintien de la synchronisation, une constante de temps dont l'ordre de grandeur est de 1 à 5 μs pour l'élaboration du niveau continu ajouté au signal.

5. Dispositif d'extraction de synchronisation pour système de diffusion à multiplexage temporel de signaux numériques contenant un motif de synchronisation et de signaux analogiques, caractérisé en ce qu'il comprend successivement sur le trajet des signaux :
— un amplificateur (24) à gain variable (G),
— un sommateur (26) d'adjonction d'un niveau continu ajustable au signal amplifié,
— des moyens (36, 38) de détection des valeurs extrêmes du signal provenant du sommateur,
— des moyens (50, 54) de commande du gain (G) en fonction de la différence entre lesdites valeurs extrêmes,
— des moyens (48, 56) d'ajustage du niveau continu en fonction de la somme des valeurs extrêmes,
— et des moyens (30, 68, 70, 72, 74, 76) de décodage du signal provenant du soustracteur et de récupération du signal d'horloge et du motif de synchronisation.

6. Dispositif selon la revendication 5 pour système de télédiffusion, caractérisé en ce qu'il comprend également : .
— des moyens commutateurs (52) pour, en réponse à la récupération du motif de synchronisation, commander le gain (G) en réponse à la différence entre les niveaux de blanc et de noir et ajuster le niveau continu en fonction d'un niveau de clampage du signal.

7. Dispositif selon la revendication 6, pour système de télévision à 625 lignes avec une fréquence d'horloge de 20,25 MHz, à multiplexage temporel de signaux numériques codés en duobinaire et contenant un motif de synchronisation par ligne et de signaux analogiques de luminance et de chrominance comprimés temporellement, le rapport entre l'amplitude des signaux numériques et celle des signaux analogiques étant compris entre 80 % et 100 %, caractérisé en ce que les moyens de commande (54) sont prévus pour présenter une constante de temps comprise entre 100 ms et 1 s.

8. Dispositif selon la revendication 7, caractérisé en ce que les moyens d'ajustement du niveau continu sont prévus pour avoir une constante de temps du même ordre que la durée d'une ligne ·lors de la commande par la somme des niveaux extrêmes, de 1 à 5 μs lors de la commande par le niveau de clampage.

9. Dispositif selon la revendication 7 ou 8, caractérisé en ce que le niveau de clampage est fourni par des moyens échantillonneurs (64) ayant une durée de commutation de l'ordre de 10 ns.

**Claims**

1. A synchronization extraction process for a broadcasting system with time multiplexing of digital signals containing a synchronization pattern and analog signals, characterized in that the extreme values of the signals to be subjected to decoding, previously amplified with a gain are detected, with a time constant compatible with the low cut-off frequencies to be accomodated ; in that the gain G is controlled as a decreasing function of the difference between the extreme values with a time constant greater by several orders of magnitude than the repetition period of the multiplex ; in that (before decoding and determination of the extreme values) a DC component is added to the amplified signal which is a decreasing function of the sum of the extreme values, until retrieval of the clock signal then identification of the synchronization pattern downstream of the decoding.

2. Process according to claim 1, characterized in that, after synchronization signal identification, the synchronization is held by substituting a control responsive to the difference between the white and black levels for the control as a function of the difference between the extreme values and by substituting a control by a clamping signal included in each line in the multiplex for the control as a function of the extreme values.

3. Process according to claim 1 for a 625 line television system with a 20.25 MHz clock frequency, with time multiplexing of digital signals which are duobinary coded and contain a synchronization pattern per line and time compressed luminance and chrominance analog signals, the ratio between the amplitude of the digital signals and that of the analog signals being between 80 % and 100 %, characterized in that a time constant is used during the first phase whose order of magnitude is from 100 ms to 1 s for controlling the gain and a time constant approximately equal to the duration of one line for generating the DC level added to the signal.

4. Process according to claims 2 and 3, characterized in that, during holding of the synchronization, a time constant is used of about from 1 to 5 μs for generating the DC level added to the signal.

5. A synchronization extraction device for a broadcasting system with time multiplexing of digital signals containing a synchronization pattern and analog signals, characterized in that it comprises successively, in the path of the signals :
— an amplifier (24) with variable gain (G),
— a summer (26) for adding an adjustable DC level to the amplified signal,
— means (36, 38) for detecting the extreme values of the signal from the summer,
— means (50, 54) for controlling the gain (G) as a function of the difference between said extreme values,
— means (48, 56) for adjusting the DC level as a function of the sum of the extreme values,
— and means (30, 68, 70, 72, 74, 76) for decoding the signal from the substractor and retrieving the clock signal and the synchronization pattern.

6. Device according to claim 5 for a television broadcasting system, characterized in that it also comprises :
— switching means (52) for, in response to retrieval of the synchronization pattern, controlling the gain (G) in response to the difference between the black and white levels and adjusting the DC level as a function of the clamping level of the signal.

7. Device according to claim 6, for a 625 line television system with a clock frequency of 20.25 MHz, with time multiplexing of duobinary coded digital signals containing one synchronization pattern per line and time compressed luminance and chrominance analog signals, the ratio between the amplitude of the digital signals and that of the analog signals being between 80 % and 100 %, characterized in that the control means (54) are provided for having a time constant between 100 ms and 1 s.

8. Device according to claim 7, characterized in that the means for adjusting the DC level are provided so as to have a time constant of the same order as the duration of one line during control by the sum of the extreme levels, of from 1 to 5 μs during control by the clamping level.

9. Device according to claim 7 or 8, characterized in that the clamping level is provided by sampling means (64) having a switching time of the order of 10 ns.

### Patentansprüche

1. Verfahren zum Extrahieren von Synchronisiersignalen für ein Übertragungssystem mit Zeitmultiplex von digitalen Signalen, die ein Synchronisiersignal enthalten, und analogen Signalen, dadurch gekennzeichnet, daß die Extremwerte der zu dekodierenden, vorher mit einem Verstärkungsgrad G verstärkten Signale mit einer Zeitkonstante ermittelt werden, die mit den wiederzugebenden unteren Grenzfrequenzen kompatibel ist, daß der Verstärkungsgrad G nach einer abnehmenden Funktion der Differenz zwischen den Extremwerten mit einer Zeitkonstante gesteuert wird, die um mehrere Größenordnungen größer als die Folgeperiode des Multiplex ist, und daß (vor dem Dekodieren und dem Ermitteln der Extremwerte) zum verstärkten Signal eine Gleichspannungskomponente hinzugefügt wird, die eine abnehmende Funktion der Summe der Extremwerte ist, und zwar bis zur Rückgewinnung des Taktsignals und Identifizierung des Synchronisiersignals nach der Dekodierung.

2. Verfahren nach Anspruch 1, dadurch gekennzeichnet, daß nach der Identifizierung des synchronisiersignals die Synchronisierung aufrechterhalten wird, indem der einer Funktion der Differenz zwischen den Extremwerten entsprechende Steuerbefehl durch einen Steuerbefehl ersetzt wird, welcher der Differenz zwischen den Schwarz- und Weiß-Pegeln entspricht, und indem der einer Funktion der Summe der Extremwerte entsprechende Steuerbefehl durch einen Steuerbefehl seitens eines Clampsignals ersetzt wird, das in jeder Zeile des Multiplex enthalten ist.

3. Verfahren nach Anspruch 1, für ein Fernsehsystem mit 625 Zeilen und einer Taktfrequenz von 20,25 MHz, mit Zeitmultiplex von duobinär kodierten Digitalsignalen, die je Zeile ein Synchronisiersignal enthalten, und von zeitlich komprimierten Luminanz- und Chrominanz-Analogsignalen, wobei das Verhältnis zwischen der Amplitude der Digitalsignale und jener der Analogsignale zwischen 80 % und 100 % beträgt, dadurch gekennzeichnet, daß während einer ersten Phase für die Steuerung des Verstärkungsgrades eine Zeitkonstante in der Größenordnung von 100 ms bis 1 s und für die Herstellung der dem Signal hinzugefügten Gleichspannungskomponente eine Zeitkonstante angewendet wird, die etwa gleich der Dauer einer Zeile ist.

4. Verfahren nach den Ansprüchen 2 und 3, dadurch gekennzeichnet, daß zur weiteren Aufrechterhaltung der Synchronisierung für die Herstellung der dem Signal hinzugefügten Gleichspannungskomponente eine Zeitkonstante in der Größenordnung von 1 bis 5 μs angewendet wird.

5. Anordnung zum Extrahieren von Synchronisiersignalen für ein Übertragungssystem mit Zeitmultiplex von Digitalsignalen, die ein Synchronisiersignal enthalten, und von Analogsignalen, dadurch gekennzeichnet, daß auf dem Signalweg hintereinander vorgesehen sind :
— ein Verstärker (24) mit variablem Verstärkungsgrad (G),
— ein Summierer (26) zum Hinzufügen einer einstellbaren Gleichspannungskomponente zum verstärkten Signal,
— Mittel (36, 38) zum Feststellen der Extremwerte des vom Summierer kommenden Signals,

— Mittel (50, 54) zum Steuern des Verstärkungsgrades (G) in Abhängigkeit von der Differenz dieser Extremwerte,

— Mittel (48, 56) zum Einstellen der Gleichspannungskomponente in Abhängigkeit von der Summe der Extremwerte,

— und Mittel (30, 68, 70, 72, 74, 76) zum Dekodieren des Signals, das vom Summierer kommt, und zur Rückgewinnung des Taktsignals und des Synchronisiersignals.

6. Anordnung nach Anspruch 5, für Fernsehübertragungssysteme, dadurch gekennzeichnet, daß sie ferner aufweist :

— Umschalter (52), um nach der Rückgewinnung des Synchronisiersignals den Verstärkungsgrad (G) in Abhängigkeit von der Differenz zwischen den Schwarz- und Weiß-Pegeln zu steuern und die Gleichspannungskomponente in Abhängigkeit von einem Clampsignalpegel einzustellen.

7. Anordnung nach Anspruch 6, für Fernsehsysteme mit 625 Zeilen und einer Taktfrequenz von 20,25 MHz, mit Zeitmultiplex von duobinär kodierten Digitalsignalen, die je Zeile ein Synchronisiersignal enthalten, und von zeitlich komprimierten Luminanz- und Chrominanz-Analogsignalen, wobei das Verhältnis zwischen der Amplitude der Digitalsignale und jener der Analogsignale zwischen 80 % und 100 % beträgt, dadurch gekennzeichnet, daß die Steuermittel (54) mit einer Zeitkonstante zwischen 100 ms und 1 s ausgebildet sind.

8. Anordnung nach Anspruch 7, dadurch gekennzeichnet, daß die Einstellmittel für den Gleichspannungspegel eine Zeitkonstante aufweisen, die während der Steuerung in Abhängigkeit von der Summe der Extremwerte von gleicher Größenordnung wie die Dauer einer Zeile ist und während der Steuerung in Abhängigkeit vom Clampsignalpegel 1 bis 5 µs beträgt.

9. Anordnung nach Anspruch 7 oder 8, dadurch gekennzeichnet, daß der Clampsignalpegel von einem Zerhacker (64) geliefert wird, der eine Kommutationsdauer in der Größenordnung von 10 ns aufweist.

**0 167 430**

FIG.1.

FIG.2.

$s_1$

$s_2$

0,8 V

FIG.3.

$s_1$

32

30

34

$s_2$

32

1

FIG. 4.

FIG.5.

FIG.7.

FIG.6.